# EUROPEAN PATENT SPECIFICATION

(11) **EP 2 392 090 B1**
(45) Date of publication and mention of the grant of the patent: **18.05.2022**
(21) Application number: 10736344.2
(22) Date of filing: 27.01.2010
(51) Int. Cl.: H04W 4/24, H04L 12/14, H04M 15/00, H04L 12/24

(54) **DEVICE GROUP PARTITIONS AND SETTLEMENT PLATFORM**
GERÄTEGRUPPENPARTITIONEN UND ABWICKLUNGSPLATTFORM
CLOISONNEMENTS DE GROUPES DE DISPOSITIFS ET PLATE-FORME DE RÈGLEMENT

(30) Priority: 04.02.2009 US 206944 P; 15.10.2009 US 252153 P; 28.01.2009 US 206354 P; 10.02.2009 US 207393 P; 06.07.2009 US 270353 P; 13.02.2009 US 207739 P; 02.03.2009 US 380780 P
(43) Date of publication of application: 07.12.2011
(73) Proprietor: Headwater Research LLC, Tyler, TX 75703 (US)
(72) Inventor: RALEIGH, Gregory, G., Woodside, CA 94062 (US)
(74) Representative: Eisenführ Speiser
(86) International application number: PCT/US2010/022238
(87) International publication number: WO 2010/088277

(56) References cited:
- EP-A1- 1 545 114
- EP-A1- 1 887 732
- EP-A1- 2 007 065
- WO-A1-02/067616
- WO-A1-2011/002450
- WO-A2-03/017063
- WO-A2-03/017065
- CN-A- 1 878 160
- CN-C- 100 518 169
- US-A1- 2003 050 070
- US-B1- 7 289 489

## Description

The present invention is defined by the appended independent claims. Dependent claims constitute embodiments of the invention. Although the invention is only defined by the claims, the below embodiments, examples and aspects are only present for the sole purpose in aiding in understanding the background and advantages of the invention.

### BACKGROUND OF THE INVENTION

With the advent of mass market digital communications, applications and content distribution, many access networks such as wireless networks, cable networks and DSL (Digital Subscriber Line) networks are pressed for user capacity, with, for example, EVDO (Evolution-Data Optimized), HSPA (High Speed Packet Access), LTE (Long Term Evolution), WiMax (Worldwide Interoperability for Microwave Access), DOCSIS, DSL, and Wi-Fi (Wireless Fidelity) becoming user capacity constrained. In the wireless case, although network capacity will increase with new higher capacity wireless radio access technologies, such as MIMO (Multiple-Input Multiple-Output), and with more frequency spectrum and cell splitting being deployed in the future, these capacity gains are likely to be less than what is required to meet growing digital networking demand.

Similarly, although wire line access networks, such as cable and DSL, can have higher average capacity per user compared to wireless, wire line user service consumption habits are trending toward very high bandwidth applications and content that can quickly consume the available capacity and degrade overall network service experience. Because some components of service provider costs go up with increasing bandwidth, this trend will also negatively impact service provider profits.

US 7,289,489 B1 discloses a method of billing a variable bit rate communication between a first terminal and a distant terminal to a broadband subscriber wherein it is permitted to change billing parameters during a call in real time in response to user inputs including user requested changes in quality of service, changes in data rate and changes in preferred service provider.

US 2003/0050070 A1 presents an arrangement for dynamic account allocation, which is achieved by pooling together spectrum and network availability, as well as congestion information, from different service providers in a central database and by the purchase of wholesale volume of network capacity or accounts with predetermined monthly usage.

WO 03/017065 A2 describes a method, system, and computer-readable medium having computer-executable instructions for determining parties to a transaction. The method includes receiving data related to an event, where the data includes one or more data elements. The method also includes selecting the data elements that identify the parties to the transaction, determining whether additional data elements are required to identify the parties to the transaction, and identifying the additional data elements. The event may be an exchange of data between the parties over a communication network, and the data related to the event may be stored in a usage record. The additional data element may identify an owner or party to the transaction, called an accountable. The party may have direct or indirect association in the transaction and may not be obvious from the record of the transaction itself.

EP 1 887 732 A1 is dedicated to a billing system for internet content providers. A method for content charging is described in which a service activation request issued by the user and forwarded by a portal server is sent to a policy server. In response to the service activation request a policy activation message is sent to a content control gateway by the policy server, wherein the service policy contains information regarding the charging according to the user service consumption information reported by the content control gateway.

WO 02/067616 A1 discloses a further system dedicated to billing services from third party providers within a network. A charging gateway is suggested which provides a generic interface. According to given rules billing parameters are determined.

EP 1 545 114 A1 teaches a method and apparatus for division of revenue of communication among different proprietors, where the division of revenue among the different proprietors is performed by a gateway office, wherein the gateway office will set a source parameter and a destination parameter respectively from the source and the destination when a call goes through the gateway office.

WO 03/017063 suggests a method, system, and computer-readable medium having computer-executable instructions for rating a transaction. The method includes processing a transaction, where the transaction is processed when a service is provided from a service provider to a service consumer, accessing via a computer network multiple pricing plans related to the transaction, and rating the transaction in accordance with the multiple pricing plans. The method may further include receiving output states from at least one pricing plan. The rating may be accomplished within one pricing plan, or within a group of pricing plans.

### BRIEF DESCRIPTION OF THE DRAWINGS

Various embodiments of the invention are disclosed in the following detailed description and the accompanying drawings.
**Figure 1** illustrates a wireless network architecture for providing device group partitions and a settlement platform in accordance with some embodiments.
**Figure 2** illustrates another wireless network architecture for providing device group partitions and a settlement platform in accordance with some embodiments.
**Figure 3** illustrates a wireless network architecture including a settlement platform in accordance with some embodiments.
**Figure 4** illustrates a flow diagram for providing device assisted service usage information in accordance with some embodiments.
**Figure 5** illustrates a flow diagram for providing a settlement platform service in accordance with some embodiments.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

In some embodiments, device group partitions (e.g., partitions of devices based on associated device groups) are provided, as described herein. For example, one or more device service processor settings are controlled by a service controller, which can be partitioned to allow groups of devices (e.g., device group partitions, such as based on type of device, service plan (such as a service plan that is based on a revenue share and/or any other service plan), geography, service provider, enterprise, user group, or based on any other criteria for grouping devices) to be securely controlled. In some embodiments, a device group partition control capability is enabled by providing a secure network connection to the service policy settings tools that define the device pre-provisioning settings, the device pre-activation service profile settings, the network equipment service activity control policy settings (e.g., access control, routing policy, traffic control, usage limits, and/or policy for usage limit overage), and/or the network billing system database. By providing server tools that enable such settings to be controlled (e.g., or perhaps only observed, such as with respect to the billing system) by a secure workstation or secure website interface that provides network communication with the equipment, for example, that can be used to configure or program the settings, and providing for a secure partitioning of the devices that can be controlled by a given secure workstation or secure website interface, a central provider or a service provider can provide such services to, for example, multiple entities (e.g., an MVNO or an entity, such as a corporation or government agency, allocated a group of devices in a device group partition) that each can have different device and service plan combinations and/or different flavors of services for such devices (e.g., various ambient services, revenue sharing service models, and/or any other services/service plans or combinations thereof). In some embodiments, the networking equipment is implemented to secure device group partitions in which the service policies for a group of devices can be securely controlled.

In some embodiments, the service controller relies entirely on network based service usage measures to determine service usage for a given device, and aggregates or organizes device usage information for multiple devices that belong to a device group partition so that the usage activity for each device within the device group is logged for that device group. In some embodiments, the device service usage activity for each device group is then analyzed and summarized into a service activity report for that device group. In some embodiments, the device group service activity report thus generated is further processed with business logic rules to determine a service activity payment that is owed to a device group partner of a carrier, MVNO or other entity that owns of the service controller settings that determine the manner in which the device usage information is collected, aggregated, analyzed and further processed with business rules. For example, the device group partner can be an OEM, an ambient service partner, a roaming service partner, a carrier network partner, a service seller, a service re-seller, a service wholesaler, an MVNO, a virtual MVNO or other entity that has a business relationship with the entity that owns the service controller settings and wishes to compensate the partner for helping in some way to distribute services or service activations.

In some embodiments, the business rules logic include a variety of reconciliation algorithms to determine a payment that is due to or from a device group partner. For example, the business rules logic can determine if a device has activated on a service plan and if so which service plan the device was activated on, and this information can be used to either pay an activation incentive payment to a device group partner or can be used to generate a revenue share payment for each billing period a service play is paid for by the user. Different activation incentive payments or revenue share payments can be made based on which service plan the user activated. For example, if a device activates with a 24 hour session based plan, the one payment can be due, if a device activates with monthly service plan another larger payment is due, and/or if a device activates with a 2 year contract plan then an even larger payment is due. Similarly, in a revenue share example, the revenue share for service usage on a 24 hour plan can be a relatively low revenue share payment, while the revenue share is higher for service usage associated with a monthly service plan and even higher for a longer term contract plan. In other examples, revenue share can also be a fixed percentage of the carrier revenue for a given service plan, with the percentage potentially changing for different service plans. In another example, a user can activate on one service plan but then change to another service plan at a later time and in this case either an activation incentive payment or revenue share payment can be adjusted to reflect the change in service plan. In another example, not all the device service activity for devices within a device group is analyzed and/or provided to a device group service partner, but instead a portion of the device service activity can be analyzed and/or reported. An example where this is desirable is a situation in which an ambient service partner needs to know how much of the partner's ambient service usage was consumed by a device group for purposes of paying for that ambient service usage, but does not need to know or should not be provided with information about device usage for other ambient services or user service plan services. Another example is a device group service partner report that details service partner user purchase transactions only for the device group service partner's services and not for other possible device group service partners.

In some embodiments, the service controller relies at least in part on device based service usage measures to determine service usage for a given device, and aggregates or organizes device usage information for multiple devices that belong to a device group partition so that the usage activity for each device within the device group is logged for that device group.

In some embodiments, the aggregated service activity information for a given device group is made available to a service partner so that the service partner can audit service activity based payments. For example, this information can be made available through a Web UI, a secure web UI, other electronic distribution media or in hard copy format. In some embodiments, the aggregated service information for a device group is further processed with the business rules logic as described herein, and a summary report of service usage or service activation information is made available to the service partner. As similarly discussed herein, this information can be made available in a variety of electronic and/or hardcopy formats. In some embodiments, both the aggregate service usage information and the information that results from further processing with business rules logic are made available to a device group partner.

In some embodiments, a programming interface is provided to allow for programmable definition of the device group service usage information into a device group activity report and/or to allow for a programmable definition of the business rules to analyze the device group service activity reports and create a device group reconciliation report. In some embodiments, this programming interface is provided/implemented as a secure web UI or web portal that allows a device group manager to program the device activity collection rules and/or program the business rules logic used to create the reconciliation report. In some embodiments, the secure web UI includes a pre-defined UI that simplifies the process of writing device group service usage information aggregation filter rules and/or device group service activity information reconciliation filter (e.g., or business logic) rules. In some embodiments, a secure UI is provided so that a device group service partner is allowed to view all or part of the service activity aggregation rules and/or all or part of the reconciliation (e.g., or business logic) rules for the device group the partner is associated with.

In some embodiments, service usage information includes network based service usage information. In some embodiments, the network based service usage information includes network based CDRs (Charging Data Records). In some embodiments, service usage information includes device based service usage information. In some embodiments, device based service usage information includes device assisted CDRs, also referred to herein as micro-CDRs, as described herein. In some embodiments, micro-CDRs are used for CDR mediation or reconciliation that provides for service usage accounting on any device activity that is desired (e.g., providing granular service usage information, such as based on application layer service usage monitoring, transaction service usage monitoring, and/or other types of service usage information). In some embodiments, each device includes a service processor (e.g., a service processor executed on a processor of a communications device, such as a mobile device or an intermediate networking device that can communicate with a wireless network).

In some embodiments, each device activity that is desired to be associated with a billing event is assigned a micro-CDR transaction code, and the service processor is programmed to account for that activity associated with that transaction code (e.g., various transaction codes can be associated with service usage associated with Apple iTunes music, Apple App Store applications, FaceBook social networking, Google search, eBay online commerce, and Amazon Kindle eBooks, respectively, which can be used for providing granular service usage for these various Internet/network based services/sites/transactions and/or any other Internet/network based services/sites, which can include transactional based services, such as Apple iTunes, Apple App Store, and Amazon Kindle). For example, using these techniques, as described herein, essentially any type of device activity can be individually accounted for and/or controlled (e.g., throttled, restricted, and/or otherwise controlled as desired). In some embodiments, the service processor periodically reports (e.g., during each heartbeat or based on any other periodic, push, and/or pull communication technique(s)) micro-CDR usage measures to, for example, a service controller or some other network element/function. In some embodiments, the service controller reformats the heartbeat micro-CDR usage information into a valid CDR format (e.g., a CDR format that is used and can be processed by an SGSN or GGSN or some other authorized network element/function for CDRs) and then transmits the reformatted micro-CDRs to a network element/function for performing CDR mediation.

In some embodiments, CDR mediation is used to properly account for the micro-CDR service usage information by depositing it into an appropriate service usage account and deducting it from the user device bulk service usage account. For example, this technique provides for a flexible service usage billing solution that uses pre-existing solutions for CDR mediation and billing. For example, the billing system can process the mediated CDR feed from CDR mediation, apply the appropriate account billing codes to the aggregated micro-CDR information that was generated by the device, and then generate billing events in a manner that does not require changes to existing billing systems, infrastructures, and techniques (e.g., using new transaction codes to label the new device assisted billing capabilities).

In some embodiments, the communications device is a mobile communications device, and the service includes one or more Internet based services, and the mobile communications device includes one or more of the following: a mobile phone, a PDA, an eBook reader, a music device, an entertainment/gaming device, a computer, laptop, a netbook, a tablet, and a home networking system. In some embodiments, the communications device includes a modem, and the processor is located in the modem. In some embodiments, an intermediate networking device includes any type of networking device capable of communicating with a device and a network, including a wireless network, example intermediate networking devices include a femto cell, or any network communication device that translates the wireless data received from the device to a network, such as an access network. In some embodiments, intermediate networking devices include 3G/4G WWAN to WLAN bridges/routers/gateways, femto cells, DOCSIS modems, DSL modems, remote access/backup routers, and other intermediate network devices.

In some embodiments, a revenue sharing model is provided using a settlement platform. In some embodiments, a revenue sharing model is provided using a settlement platform for providing one or more of the following: service activation revenue share or bounty (e.g., to one or more partners, such as OEMs, an ambient service partner, a roaming service partner, a carrier network partner, a device retailer or distributor, a service seller, a service re-seller, distributors, MVNOs, carriers, and/or service providers), service usage billing (e.g., to one or more partners, such as OEMs, distributors, MVNOs, carriers, and/or service providers), service usage revenue share (e.g., to one or more partners, such as OEMs, distributors, MVNOs, carriers, and/or service providers), and transactional revenue share (e.g., to one or more partners, such as an OEM, an ambient service partner, a roaming service partner, a carrier network partner, a device retailer or distributor, a service seller, a service re-seller, distributors, MVNOs, carriers, and/or service providers). For example, a revenue sharing model can allow for a distribution partner to access activation information for a specified device or a specified device group for which they are potentially entitled to a bounty (e.g., a fixed fee or some other payment or credit terms, etc.) for activation, and the revenue sharing model can also allow for one or more OEMs (e.g., or other device group partner) access to information regarding service usage for the specified device or the specified device group for which they are potentially entitled to a service usage revenue share (e.g., percentage, fixed fee, transactional fee or credit, or some other form of revenue share) for the associated or particular service usage. For example, a distributor (e.g., Amazon, Best Buy, or any other distributor) can be allocated a bounty for each activated eBook reader based on service activation for that eBook reader (e.g., the value/terms of the bounty can vary based on the type of service that is activated for that eBook reader, such as an ambient service versus a premium data plan service), and the bounty can also require activation within a certain period of time of the sale (e.g., if activated within 30 days after sale by the distributor of the eBook to a customer). As another example, a service revenue share can be provided with an OEM (e.g., Sony or Google, or another eBook manufacturer, or another device group distribution partner), for example, for a period of time after the initial activation of the eBook reader (e.g., 2 years after activation), which is referred to herein as, for example, a service revenue bounty, a service revenue share, or a service revenue sharing model. In some embodiments, a partner (e.g., Amazon, Barnes & Noble, Google, or any other partner) pays for or subsidizes the cost of the associated service usage for the eBook reader, and a revenue share for each book paid for by the service provider is provided (e.g., a transactional service revenue share) between the service provider (e.g., carrier, central provider, MVNO, and/or other service provider) and the partner. In some embodiments, these and other revenue share model techniques are implemented using a settlement platform, as described herein. In some embodiments, these and other revenue share and service billing techniques are implemented using a settlement platform and micro-CDRs, as described herein.

In some embodiments, a billing interface is provided between the service controller and the billing system (e.g., an external service plan read/write interface). In some embodiments, the service controller periodically polls the billing system interface with a request/command (e.g., "read-billing-plan" command) to determine if the user has changed the service plan of choice through some interface other than the service processor service plan selection UI (User Interface) (e.g., Internet or phone). If the user has changed the service plan, then the service controller updates the service plan of record on the service controller database and on the device (e.g., via secure communication with the service processor executing on a processor of the device). In some embodiments, another request/command (e.g., the "write-billing-plan" interface command) is used to inform the billing system when the user has selected a new or initial plan option from the service processor service plan selection UI.

In some embodiments, a settlement platform is provided, as described herein. In some embodiments, the settlement platform includes support for an activation process (e.g., to facilitate tracking and payment of a bounty for one or more partners for an activation). In some embodiments, the settlement platform provides a service/transactional revenue share settlement platform. In some embodiments, the settlement platform distributes accounting and settlement information to one or more of carriers, distribution partners, MVNOs (Mobile Virtual Network Operator), wholesale partners, and/or other partners (e.g., for a service usage billing to one or more partners and/or for a service/transactional revenue share with one or more partners). In some embodiments, the settlement platform receives and processes (network based) CDRs and/or micro-CDRs. In some embodiments, the settlement platform processes CDRs and/or micro-CDRs for CDR mediation that provides for service usage accounting (e.g., service usage billing allocation and/or service usage/transactional revenue share) on any device activity that is desired. In some embodiments, the settlement platform receives and processes micro-CDRs to determine accounting and settlement information for various services used by such devices. In some embodiments, the settlement platform receives and processes micro-CDRs to determine accounting and settlement information for various services for such devices and distributes the accounting and settlement information to one or more of carriers, distribution partners, MVNOs, wholesale partners, and/or other partners or entities, as described herein.

In some embodiments, multiple device groups are supported in which each device group is provided an independent and secure management for transparent reconciliation. In some embodiments, a service provider selects who receives a reconciliation report of activations and service usage based on a service plan type. In some embodiments, service usage information (e.g., CDRs and/or micro-CDRs) are used for service plan billing and/or reconciliation reports. In some embodiments, different service plans on the same device can be communicated to different partners and/or the same partner (e.g., one or more of carriers, distribution partners, MVNOs, and/or wholesale partner). In some embodiments, multi-device and multi-user reconciliation capabilities are provided. In some embodiments, service /transactional revenue share techniques as described herein are provided to augment and/or replace bounty-plus-subsidy models for non-carrier channels. For example, the settlement platform can be used to implement a revenue share model allocating shared service usage revenue among two or more partners (e.g., one or more of carriers, distribution partners, MVNOs, wholesale partners, and/or other partners) for one or more services (e.g., for a discounted bounty or in lieu of a bounty, the mobile device provider can receive a service/transactional revenue share for one or more services provided by a service provider for a mobile device distributed/sold through the service provider).

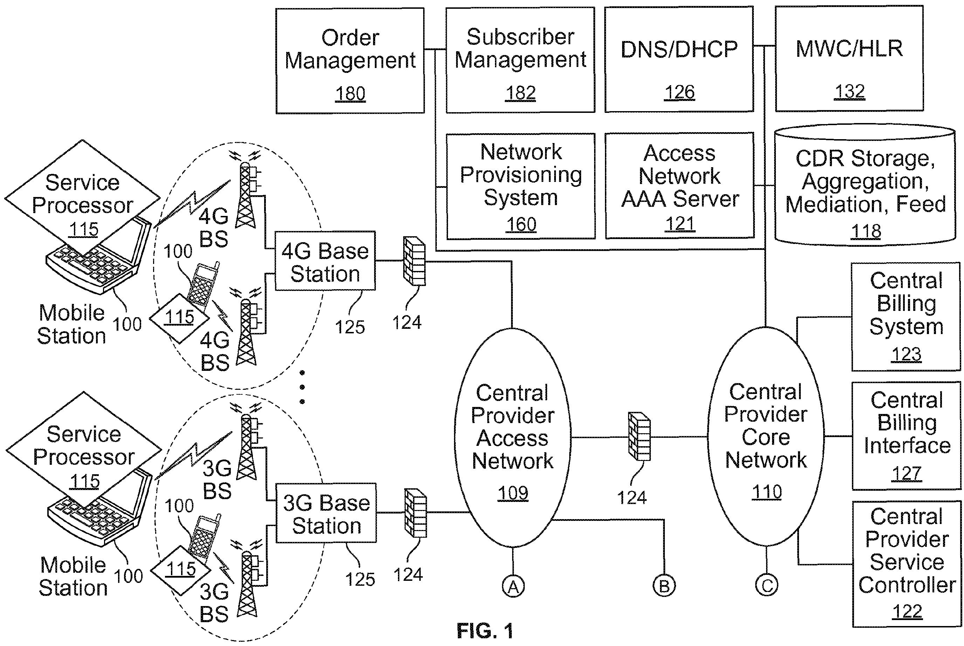

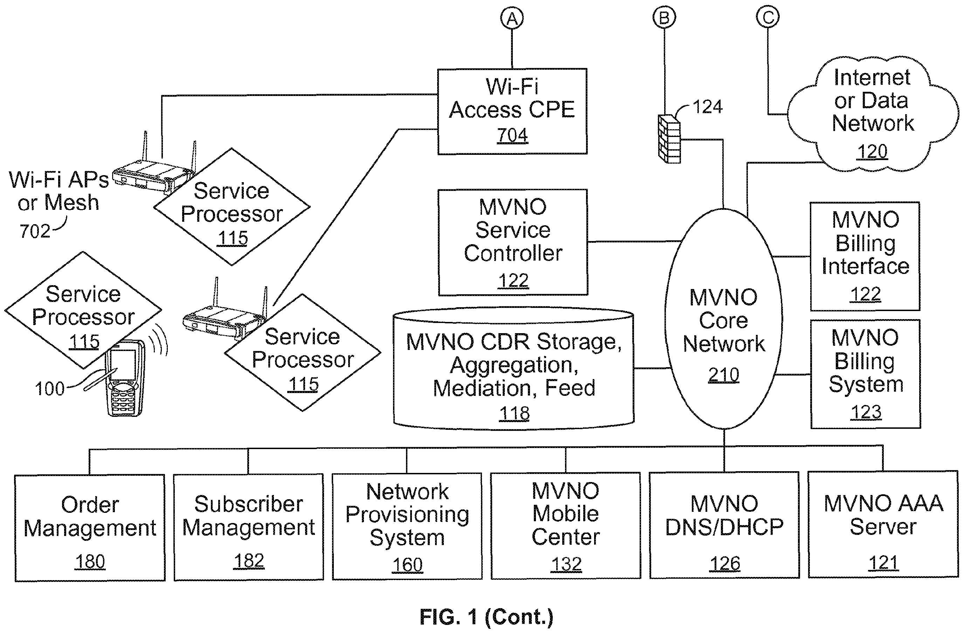

**Figure 1** illustrates a wireless network architecture for providing device group partitions and a settlement platform in accordance with some embodiments. As shown, Figure 1 includes a 4G/3G/2G wireless network operated by, for example, a central provider. As shown, various wireless devices 100 are in communication with base stations 125 for wireless network communication with the wireless network (e.g., via a firewall 124), and other devices 100 are in communication with Wi-Fi Access Points (APs) or Mesh 702 for wireless communication to Wi-Fi Access CPE 704 in communication with central provider access network 109. In some embodiments, each of the wireless devices 100 includes a service processor 115 (as shown) (e.g., executed on a processor of the wireless device 100), and each service processor connects through a secure control plane link to a service controller 122 (e.g., using encrypted communications).

In some embodiments, service usage information includes network based service usage information (e.g., network based service usage measures or CDRs, which can, for example, be generated by service usage measurement apparatus in the network equipment), which is obtained from one or more network elements (e.g., BTS/BSCs 125, RAN Gateways (not shown), Transport Gateways (not shown), Mobile Wireless Center/HLRs 132, AAA 121, Service Usage History/CDR Aggregation, Mediation, Feed 118, or other network equipment). In some embodiments, service usage information includes micro-CDRs. In some embodiments, micro-CDRs are used for CDR mediation or reconciliation that provides for service usage accounting on any device activity that is desired. In some embodiments, each device activity that is desired to be associated with a billing event is assigned a micro-CDR transaction code, and the service processor 115 is programmed to account for that activity associated with that transaction code. In some embodiments, the service processor 115 periodically reports (e.g., during each heartbeat or based on any other periodic, push, and/or pull communication technique(s)) micro-CDR usage measures to, for example, the service controller 122 or some other network element. In some embodiments, the service controller 122 reformats the heartbeat micro-CDR usage information into a valid CDR format (e.g., a CDR format that is used and can be processed by an SGSN or GGSN or other network elements/equipment used/authorized for generating or processing CDRs) and then transmits it to a network element/function for CDR mediation (e.g., CDR Storage, Aggregation, Mediation, Feed 118).

In some embodiments, CDR mediation is used to account for the micro-CDR service usage information by depositing it into an appropriate service usage account and deducting it from the user device bulk service usage account. For example, this technique provides for a flexible service usage billing solution that uses pre-existing solutions, infrastructures, and/or techniques for CDR mediation and billing. For example, the billing system (e.g., billing system 123 or billing interface 127) processes the mediated CDR feed from CDR mediation, applies the appropriate account billing codes to the aggregated micro-CDR information that was generated by the device, and then generates billing events in a manner that does not require changes to the existing billing systems (e.g., using new transaction codes to label the new device assisted billing capabilities). In some embodiments, network provisioning system 160 provisions various network elements/functions for authorization in the network, such as to authorize certain network elements/functions (e.g., CDR storage, aggregation, mediation, feed 118 or other network elements/functions) for providing micro-CDRs, reformatted micro-CDRs, and/or aggregated or reconciled CDRs.

As shown in Figure 1, a CDR storage, aggregation, mediation, feed 118 is provided. In some embodiments, the CDR storage, aggregation, mediation, feed 118 receives, stores, aggregates and mediates micro-CDRs received from mobile devices 100. In some embodiments, the CDR storage, aggregation, mediation, feed 118 also provides a settlement platform using the mediated micro-CDRs, as described herein. In some embodiments, another network element provides the settlement platform using aggregated and/or mediated micro-CDRs (e.g., central billing interface 127 and/or another network element/function).

In some embodiments, various techniques for partitioning of device groups are used for partitioning the mobile devices 100 (e.g., allocating a subset of mobile devices 100 for a distributor, an OEM, a MVNO, and/or another partner or entity). As shown in Figure 1, a MVNO core network 210 includes a MVNO CDR storage, aggregation, mediation, feed 118, a MVNO billing interface 122, and a MVNO billing system 123 (and other network elements as shown in Figure 1). In some embodiments, the MVNO CDR storage, aggregation, mediation, feed 118 receives, stores, aggregates and mediates micro-CDRs received from mobile devices 100 (e.g., MVNO group partitioned devices).

Those of ordinary skill in the art will appreciate that various other network architectures can be used for providing device group partitions and a settlement platform, and Figure 1 is illustrative of just one such example network architecture for which device group partitions and settlement platform techniques described herein can be provided.

In some embodiments, CDR storage, aggregation, mediation, feed 118 (e.g., service usage 118, including a billing aggregation data store and rules engine) is a functional descriptor for, in some embodiments, a device/network level service usage information collection, aggregation, mediation, and reporting function located in one or more of the networking equipment apparatus/systems attached to one or more of the sub-networks shown in Figure 1 (e.g., central provider access network 109 and/or central provider core network 110), which is in communication with the service controller 122 and a central billing interface 127. As shown in Figure 1, service usage 118 provides a function in communication with the central provider core network 110. In some embodiments, the CDR storage, aggregation, mediation, feed 118 function is located elsewhere in the network or partially located in elsewhere or integrated with/as part of other network elements. In some embodiments, CDR storage, aggregation, mediation, feed 118 functionality is located or partially located in the AAA server 121 and/or the mobile wireless center/Home Location Register(HLR) 132 (as shown, in communication with a DNS/DHCP server 126). In some embodiments, service usage 118 functionality is located or partially located in the base station, base station controller and/or base station aggregator, collectively referred to as base station 125 in Figure 1. In some embodiments, CDR storage, aggregation, mediation, feed 118 functionality is located or partially located in a networking component in the central provider access network 109, a networking component in the core network 110, the central billing system 123, the central billing interface 127, and/or in another network component or function. This discussion on the possible locations for the network based and device based service usage information collection, aggregation, mediation, and reporting function (e.g., CDR storage, aggregation, mediation, feed 118) can be easily generalized as described herein and as shown in the other figures and embodiments described herein by one of ordinary skill in the art. Also as shown in Figure 1, the service controller 122 is in communication with the central billing interface 123 (also sometimes referred to as the external billing management interface or billing communication interface) 127, which is in communication with the central billing system 123. As shown in Figure 1, an order management 180 and subscriber management 182 are also in communication with the central provider core network 110 for facilitating order and subscriber management of services for the devices 100 in accordance with some embodiments.

In some embodiments, the CDR storage, aggregation, mediation, feed 118 (and/or other network elements or combinations of network elements) provides a device/network level service usage information collection, aggregation, mediation, and reporting function. In some embodiments, the CDR storage, aggregation, mediation, feed 118 (and/or other network elements or combinations of network elements) collects device generated/assisted service usage information (e.g., micro-CDRs) for one or more devices on the wireless network (e.g., devices 100); and provides the device generated service usage information in a syntax and a communication protocol that can be used by the wireless network to augment or replace network generated usage information for the one or more devices on the wireless network. In some embodiments, the syntax is a charging data record (CDR), and the communication protocol is selected from one or more of the following: 3GPP, 3GPP2, or other communication protocols. In some embodiments, as described herein, the CDR storage, aggregation, mediation, feed 118 collects/receives micro-CDRs for one or more devices on the wireless network (e.g., devices 100). In some embodiments, the CDR storage, aggregation, mediation, feed 118 (and/or other network elements or combinations of network elements) includes a service usage data store (e.g., a billing aggregator) and a rules engine for aggregating the collected device generated service usage information. In some embodiments, the network device is a CDR feed aggregator, and the CDR storage, aggregation, mediation, feed 118 (and/or other network elements or combinations of network elements) also aggregates (network based) CDRs and/or micro-CDRs for the one or more devices on the wireless network; applies a set of rules to the aggregated CDRs and/or micro-CDRs using a rules engine (e.g., bill by account, transactional billing, revenue sharing model, and/or any other billing or other rules for service usage information collection, aggregation, mediation, and reporting), and communicates a new set of CDRs for the one or more devices on the wireless network to a billing interface or a billing system (e.g., providing a CDR with a billing offset by account/service). In some embodiments, a revenue sharing platform is provided using various techniques described herein.

In some embodiments, the CDR storage, aggregation, mediation, feed 118 (and/or other network elements or combinations of network elements) communicates a new set of CDRs (e.g., aggregated and mediated CDRs and/or micro-CDRs that are then translated into standard CDRs for a given wireless network) for the one or more devices on the wireless network to a billing interface (e.g., central billing interface 127) or a billing system (e.g., central billing system 123). In some embodiments, the CDR storage, aggregation, mediation, feed 118 (and/or other network elements or combinations of network elements) communicates with a service controller (e.g., service controller 122) to collect the device generated service usage information (e.g., micro-CDRs) for the one or more devices on the wireless network. In some embodiments, the CDR storage, aggregation, mediation, feed 118 (and/or other network elements or combinations of network elements) communicates with a service controller, in which the service controller is in communication with a billing interface or a billing system. In some embodiments, the CDR storage, aggregation, mediation, feed 118 (and/or other network elements or combinations of network elements) communicates the device generated service usage information to a billing interface or a billing system. In some embodiments, the CDR storage, aggregation, mediation, feed 118 (and/or other network elements or combinations of network elements) communicates with a transport gateway and/or a Radio Access Network (RAN) gateway to collect the network generated/based service usage information for the one or more devices on the wireless network. In some embodiments, the service controller 122 communicates the device assisted service usage information (e.g., micro-CDRs) to the CDR storage, aggregation, mediation, feed 118 (and/or other network elements or combinations of network elements).

In some embodiments, the CDR storage, aggregation, mediation, feed 118 (and/or other network elements or combinations of network elements) performs rules for performing a bill by account aggregation and mediation function. In some embodiments, the CDR storage, aggregation, mediation, feed 118 (and/or other network elements or combinations of network elements) performs rules for performing a service billing function, as described herein, and/or for performing a service/transactional revenue sharing function, as described herein. In some embodiments, the service controller 122 in communication with the CDR storage, aggregation, mediation, feed 118 (and/or other network elements or combinations of network elements) performs a rules engine for aggregating and mediating the device assisted service usage information (e.g., micro-CDRs). In some embodiments, a rules engine device in communication with the CDR storage, aggregation, mediation, feed 118 (and/or other network elements or combinations of network elements) performs a rules engine for aggregating and mediating the device assisted service usage information.

In some embodiments, the rules engine is included in (e.g., integrated with/part of) the CDR storage, aggregation, mediation, feed 118. In some embodiments, the rules engine and associated functions, as described herein, is a separate function/device. In some embodiments, the service controller 122 performs some or all of these rules engine based functions, as described herein, and communicates with the central billing interface 127. In some embodiments, the service controller 122 performs some or all of these rules engine based functions, as described herein, and communicates with the central billing system 123.

In some embodiments, a settlement platform service is provided. For example, micro-CDRs can be aggregated and mediated to associate service usage for one or more services used by a communications device (e.g., a user of the communications device). A rules engine or another function can determine a revenue share allocation for the service usage for a particular service to determine the settlement for such service usage for the revenue sharing allocation/model and to distribute accounting and settlement information to one or more of carriers, distribution partners, MVNOs, wholesale partners, and/or other partners or entities. In some embodiments, the service is a transactional service.

In some embodiments, duplicate CDRs are sent from the network equipment to the billing system 123 that is used for generating service billing. In some embodiments, duplicate CDRs are filtered to send only those CDRs/records for devices controlled by the service controller and/or service processor (e.g., managed devices). For example, this approach can provide for the same level of reporting, lower level of reporting, and/or higher level of reporting as compared to the reporting required by the central billing system 123.

In some embodiments, a bill-by-account billing offset is provided. For example, bill-by-account billing offset information can be informed to the central billing system 123 by providing a CDR aggregator feed that aggregates the device assisted service usage data feed to provide a new set of CDRs for the managed devices to the central billing interface 127 and/or the central billing system 123. In some embodiments, transaction billing is provided using similar techniques. For example, transaction billing log information can be provided to the central billing interface 127 and/or the central billing system 123.

In some embodiments, the rules engine (e.g., performed by the service usage 118 or another network element, as described herein) provides a bill-by-account billing offset. For example, device assisted service usage information (e.g., micro-CDRs) includes a transaction type field or transaction code (e.g., indicating a type of service for the associated service usage information). For example, the rules engine can apply a rule or a set of rules based on the identified service associated with the device generated service usage information to determine a bill-by-account billing offset (e.g., a new CDR can be generated to provide the determined bill-by-account billing offset). In some examples, the determined bill-by-account billing offset can be provided as a credit to the user's service usage account (e.g., a new CDR can be generated with a negative offset for the user's service usage account, such as for network chatter service usage, or transactional service usage, or for any other purposes based on one or more rules performed by the rules engine).

As another example, for a transactional service, a first new CDR can be generated with a negative offset for the user's service usage account for that transactional service related usage, and a second new CDR can be generated with a positive service usage value to charge that same service usage to the transactional service provider (e.g., Amazon, eBay, or another transactional service provider). In some embodiments, the service controller 122 generates these two new CDRs, and the service usage 118 stores, aggregates, and communicates these two new CDRs to the central billing interface 127. In some embodiments, the service controller 122 generates these two new CDRs, and the service usage 118 stores, aggregates, and communicates these two new CDRs to the central billing interface 127, in which the central billing interface 127 applies rules (e.g., performs the rules engine for determining the bill-by-account billing offset).

In some embodiments, the service controller 122 sends the device generated CDRs to the rules engine (e.g., a service usage data store and rules engine, such as CDR storage, aggregation, mediation, feed 118), and the rules engine applies one or more rules, such as those described herein and/or any other billing/service usage related rules as would be apparent to one of ordinary skill in the art. In some embodiments, the service controller 122 generates CDRs similar to other network elements, and the rules (e.g., bill-by-account) are performed in the central billing interface 127. For example, for the service controller 122 to generate CDRs similar to other network elements, in some embodiments, the service controller 122 is provisioned on the wireless network (e.g., by network provision system 160) and behaves substantially similar to other CDR generators on the network).

In some embodiments, the service controller 122 is provisioned as a new type of networking function that is recognized as a valid, authorized, and secure source for CDRs by the other necessary elements in the network (e.g., CDR storage, aggregation, mediation, feed 118). In some embodiments, if the necessary network apparatus only recognize CDRs from certain types of networking equipment (e.g. a RAN gateway or transport gateway), then the service controller 122 provides authentication credentials to the other networking equipment that indicate that it is one of the approved types of equipment for providing CDRs. In some embodiments, the link between the service controller 122 and the necessary CDR aggregation and mediation equipment is secured, authenticated, encrypted, and/or signed.

In some embodiments, the CDR storage, aggregation, mediation, feed 118 discards the network based service usage information (e.g., network based CDRs) received from one or more network elements. In these embodiments, the service controller 122 provides the device assisted service usage information (e.g., device based CDRs or micro-CDRs) to the CDR storage, aggregation, mediation, feed 118 (e.g., the CDR storage, aggregation, mediation, feed 118 can just provide a store, aggregate, and communication function(s), as it is not required to mediate network based CDRs and device assisted CDRs), and the device based service usage information is provided to the central billing interface 127 or the central billing system 123.

In some embodiments, the device based CDRs (e.g., micro-CDRs) and/or new CDRs generated based on execution of a rules engine as described herein are provided only for devices that are managed and/or based on device group, service plan, or any other criteria, categorization, and/or grouping, such as based on ambient service or ambient service provider or transactional service or transactional service provider.

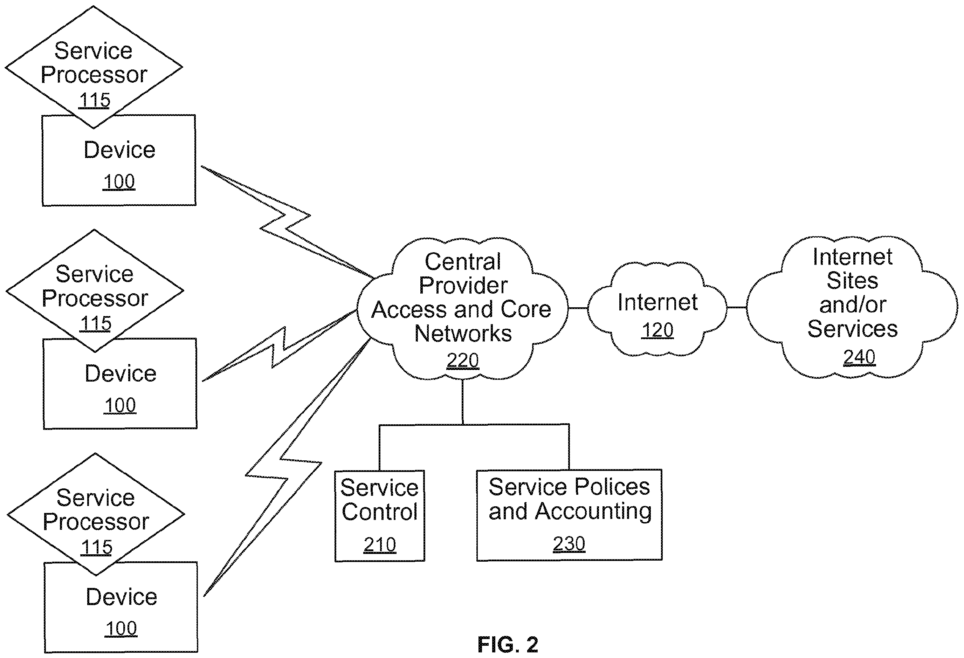

**Figure 2** illustrates another wireless network architecture for providing device group partitions and a settlement platform in accordance with some embodiments. As shown, Figure 2 includes various devices 100 including service processors 115. For example, devices 100 can include various types of mobile devices, such as phones, PDAs, computing devices, laptops, netbooks, tablets, cameras, music/media players, GPS devices, networked appliances, and any other networked device; and/or devices 100 can include various types of intermediate networking devices, as described herein. The devices 100 are in communication with service control 210 and central provider access and core networks 220. Service policies and accounting functions 230 are also provided in communication with the central provider access and core networks 220. For example, devices 100 can communicate via the central provider access and core networks 220 to the Internet 120 for access to various Internet sites/services (e.g., Google sites/services, Yahoo sites/services, Blackberry services, Apple iTunes and AppStore, Amazon.com, FaceBook, and/or any other Internet service or other network facilitated service).

In some embodiments, Figure 2 provides a wireless network architecture that supports partitioned device groups, in which each device group can be provided independent and secure management of transparent reconciliation. Those of ordinary skill in the art will appreciate that various other network architectures can be used for providing device group partitions and a settlement platform, and Figure 2 is illustrative of just another such example network architecture for which device group partitions and settlement platform techniques described herein can be provided.

In some embodiments, a service provider selects who receives a reconciliation report of activations and usage by service plan type. In some embodiments, service usage information (e.g., based on CDRs and/or micro-CDRs or other service usage measures) are used for service plan billing and for reconciliation reports. In some embodiments, different service plans on the same device (e.g., device 100) can be sent to different partners or the same partner. In some embodiments, multi-device and multi-user reconciliation capabilities are provided. In some embodiments, a settlement platform service is provided. In some embodiments, various revenue share techniques as described herein are provided (e.g., implemented using a settlement platform service, using, for example, service policies and accounting functions 230).

In some embodiments, partitioned device groups are provided. In some embodiments, each partitioned group of devices (e.g., mobile devices 100) can be uniquely managed with secure admin log-ins. In some embodiments, multi-device, multi-user accounting is provided. In some embodiments, capabilities are provided to support multiparty/multi-service reconciliation records to carriers and carrier partners, which can also support various service/transactional revenue share techniques (e.g., for reducing or eliminating the up-front subsidy and associated up-front subsidy risk of certain bounty models). In some embodiments, service usage and profitability analytics are provided (e.g., using aggregated CDRs/micro-CDRs and service policies and accounting functions 230). For example, a partitioned beta test group of devices can be tested and optimized for various service usage policies and/or service plans, and then the optimized service usage policies and/or service plans can be published to an entire or larger device group. In some embodiments, a carrier can be provided a carrier branded device group, and/or a MVNO can be provided a MVNO branded device group.

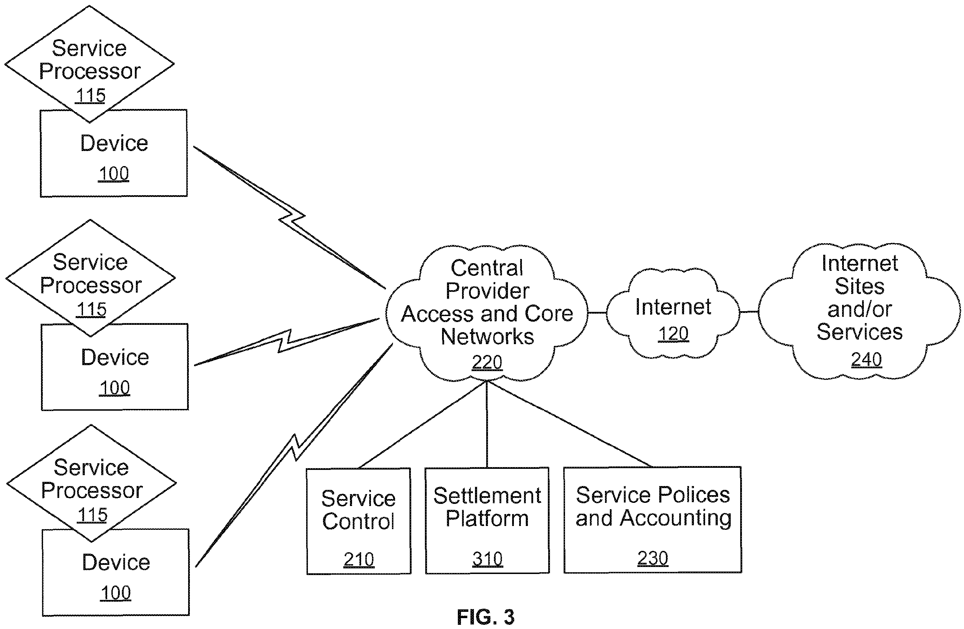

**Figure 3** illustrates a wireless network architecture including a settlement platform in accordance with some embodiments. As shown in Figure 3, a settlement platform 310 is provided (and other network elements are also provided as similarly shown in and described above with respect to Figure 2). In some embodiments, the settlement platform 310 receives, stores, aggregates and mediates micro-CDRs received from mobile devices 100. In some embodiments, the settlement platform 310 provides a settlement platform using the mediated micro-CDRs, as described herein. In some embodiments, the settlement platform 310 in combination with one or more other network elements/functions provides the settlement platform using aggregated and/or mediated micro-CDRs (e.g., central billing interface 127 and/or service policies and accounting 230). Those of ordinary skill in the art will appreciate that various other network architectures can be used for providing device group partitions and a settlement platform, and Figure 3 is illustrative of just one such example network architecture for which device group partitions and settlement platform techniques described herein can be provided.

As shown in Figure 3, the settlement platform 310 provides a function in communication with the central provider access and core networks 220. In some embodiments, the settlement platform 310 (e.g., including a billing aggregation data store and rules engine) is a functional descriptor for, in some embodiments, a device/network level service usage information collection, aggregation, mediation, and reporting function located in one or more of the networking equipment apparatus/systems attached to one or more of the sub-networks, which is in communication with the service control 210 and/or service policies and accounting 230. In some embodiments, the settlement platform 310 function is located elsewhere in the network or partially located in elsewhere or integrated with/as part of other network elements (e.g., settlement platform 310 functionality can be located or partially located in the service control 210 and/or the service policies and accounting function 230 as shown in Figure 2; and/or in the AAA server 121, the mobile wireless center/Home Location Register(HLR) 132, the base station 125, the networking component in the central provider access network 109, a networking component in the core network 110, the central billing system 123, the central billing interface 127, and/or in another network component or function, as shown in Figure 1).

In some embodiments, the settlement platform 310 includes the CDR storage, aggregation, mediation, feed 118 function as shown in and described above with respect to Figure 1 and further provides a device/network level service usage information collection, aggregation, mediation, and reporting function. In some embodiments, the rules engine is included in (e.g., integrated with/part of) the settlement platform 310. In some embodiments, the rules engine and associated functions, as described herein, is a separate function/device. In some embodiments, the service control 210 performs some or all of these rules engine based functions, as discussed herein, and communicates with the settlement platform 310 and/or the service policies and accounting 230. In some embodiments, the service control 210 includes the service controller 122 as shown in and similarly described above with respect to Figure 1.

In some embodiments, a settlement platform service is provided at least in part by the settlement platform 310. For example, as similarly described above, micro-CDRs can be aggregated and mediated to associate service usage for one or more services used by a user on a device 100. A rules engine or another function can determine a revenue share allocation for the service usage for a particular service to determine the settlement (e.g., billing and/or revenue share) for such service usage, such as for a service/transactional revenue share, and to distribute accounting and settlement information to one or more of carriers, distribution partners, MVNOs, wholesale partners, and/or other partners or entities. In some embodiments, the service is a transactional service.

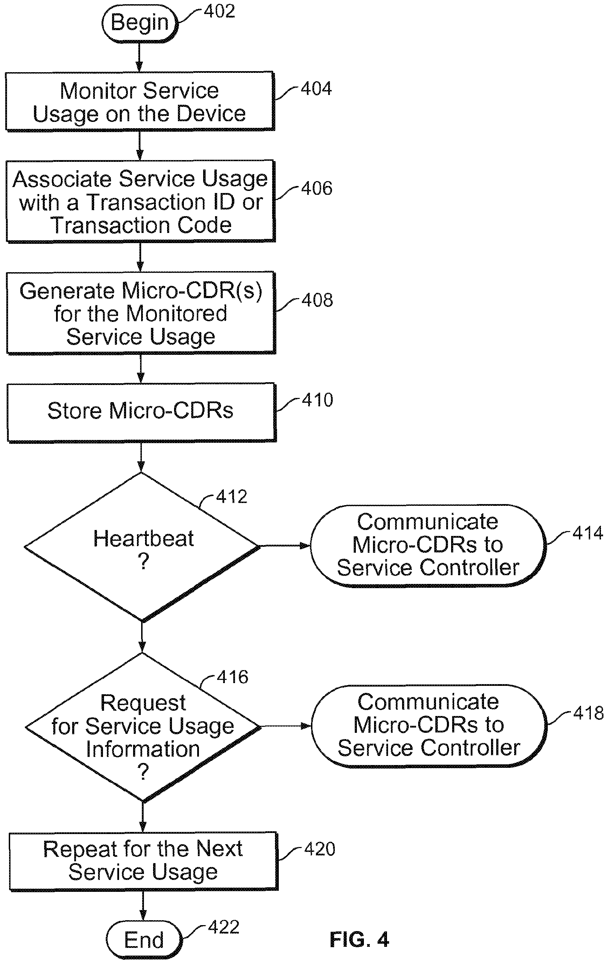

**Figure 4** illustrates a flow diagram for providing device assisted service usage information in accordance with some embodiments. At 402, the process for providing device assisted service usage information begins. At 404, service usage on the device is monitored (e.g., using a service processor executing on a processor of the device). At 406, the monitored service usage is associated with a transaction ID or transaction code (e.g., using a service processor, such as service processor 115 that provides, for example, application service level monitoring, different transaction codes are assigned to Google services, eBay services, Amazon services, Apple iTunes services, and/or other service usage activities/services). In some embodiments, monitored services include transaction based services that are monitored and assigned unique transaction codes. At 408, micro-CDR(s) are generated for the monitored service usage. At 410, the generated micro-CDRs are stored (e.g., at least until the micro-CDR(s) are communicated to the network, such as the service controller or another network element/function, such as service control 210). At 412, a heartbeat communication event is determined. At 414, if a heartbeat communication is to be provided (e.g., to communicate to the network, such as service controller 122 or another network element, such as service control 210), then the micro-CDRs are sent to the service controller (e.g., service controller 122 or another network element, such as in service control 210). At 416, a request for service usage information is determined. At 418, in response to such a request, the micro-CDRs (e.g., stored or queued micro-CDRs or a set of specifically requested micro-CDRs) are sent to the service controller (e.g., service controller 122 or another network element, such as service control 210). At 420, the process is repeated for any other monitored service usage. At 422, the process is completed.

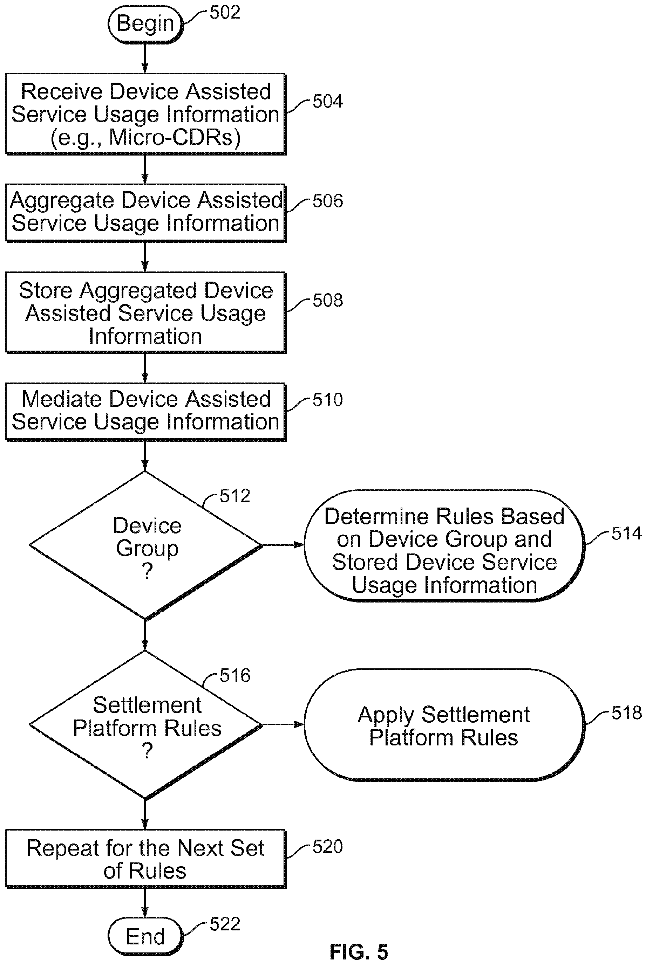

**Figure 5** illustrates a flow diagram for providing a settlement platform service in accordance with some embodiments. At 502, the process for a settlement platform begins. At 504, device assisted service usage information is received (e.g., micro-CDRs). At 506, device assisted service usage information is aggregated (e.g., based on the device and the service, such as based on associated settlement platform rules for the device and the service). At 508, the aggregated device assisted service usage information is stored. At 510, the device assisted service usage information is mediated/reconciled (e.g., based on various other measures, such as network based service usage information, and/or other metrics/criteria or techniques, such as the various techniques described herein). At 512, whether the device is a member of a device group is determined. At 514, the rules associated with that device's device group are determined. At 516, whether any settlement platform rules apply to that device group and a given service for the stored device service usage information for the device is determined (e.g., service billing and/or service/transactional revenue share related or other related rules). At 518, the settlement platform rules for the associated service usage for that device and the relevant service are applied. In some embodiments, a revenue share for the service usage for a particular service is used to determine the settlement for such service usage based on the revenue sharing allocation/model and is further used to distribute accounting and settlement information to one or more of carriers, distribution partners, MVNOs, wholesale partners, and/or other partners or entities. In some embodiments, service billing is allocated among one or more partners for a service usage. In some embodiments, a transactional revenue share among one or more partners for a transactional service is applied. At 520, the process is repeated for additional settlement platform rules. At 522, the process is completed.

## Claims

1. A method performed by a network system communicatively coupled to a wireless end-user device (100) over a wireless data network (125), the method comprising:
obtaining one or more charging data records, CDRs, from one or more CDR sources (100, 118), with at least one CDR source being the wireless end-user device (100), wherein each CDR of the one or more CDRs comprises information identifying one or more of a plurality of device-based service usage activities associated with the end-user device (100), and wherein each CDR indicates a service usage associated with each of the one or more identified device-based service usage activities; and
generating accounting and settlement information by aggregating the CDRs comprising the information identifying one or more of a plurality of device-based service usage activities associated with the wireless end-user device (100),
applying a set of rules to the aggregated CDRs, and
generating the accounting and settlement information in accordance with said set of rules,
wherein the end-user device (100) belongs to a first device group of a plurality of device groups, the first device group comprising one or more end-user devices including the end-user device (100), and wherein the set of rules is determined based on the end-user device (100) belonging to the first device group.

2. The method recited in claim 1, wherein the information identifying one or more device-based service usage activities comprises one or more transaction codes.

3. The method recited in claim 1, wherein each of the one or more device-based service usage activities is associated with a billing event.

4. The method recited in any of claims 1 to 3, wherein the one or more CDRs provide for service usage accounting of at least one of the one or more device- based service usage activities based on application layer service usage monitoring and/or transaction service usage monitoring.

5. The method recited in any of claims 1 to 4, further comprising generating a reconciliation report based on the information identifying one or more of a plurality of device-based service usage activities associated with the end-user device (100).

6. The method recited in any of claims 1 to 5, wherein at least one of the one or more CDR sources is a network element.

7. The method recited in any of claims 1 to 5, wherein the one or more CDR sources include the end-user device (100) and a network element, and the one or more CDRs include a first CDR from the end-user device (100) and a second CDR from the network element.

8. The method recited in claim 7, wherein at least one of the first CDR and the second CDR includes information identifying a particular device-based service usage activity available to the end-user device.

9. The method recited in any of claims 1 to 6, wherein the set of rules is configured to assist in
billing the partner entity for the at least a first portion of service usage associated with the one or more device-based service usage activities indicated by the at least one of the one or more CDRs, and
billing a second entity for the at least a second portion of the service usage associated with the one or more device-based service usage activities indicated by the at least one of the one or more CDRs.

10. The method recited in claim 1, wherein the one or more CDRs identify a first device-based service usage activity and a second device-based service usage activity.

11. The method recited in any of claims 1 to 8, wherein the set of rules is configured to:
determine an offset based on the at least one of the one or more CDRs,
include the offset in the accounting and settlement information.

12. The method recited in any of claims 1 to 8, wherein the set of rules is configured to:
determine a revenue share or bounty based on the at least one of the one or more CDRs,
include the revenue share or bounty in the accounting and settlement information.

13. The method recited in any of claims 1 to 8, wherein the set of rules is configured to:
determine an offset based on the at least one of the one or more CDRs and based on a selection of a service plan by a user or a purchase by a user,
include the offset in the accounting and settlement information.

14. The method recited in any of claims 1 to 8, wherein the set of rules is configured to assist in implementing a revenue share between the partner entity and a second entity.

15. The method recited in any of claims 1 to 8, wherein the set of rules is configured to assist in implementing a revenue share between the partner entity and the operator of the wireless data network.

16. The method recited in any of claims 1 to 8, wherein the set of rules is configured to assist in allocating a fixed fee to the partner entity.

17. The method recited in any of claims 1 to 16, wherein the accounting and settlement information assists in billing a user associated with the end-user device.

18. The method recited in any of claims 1 to 17, wherein the partner entity comprises a device group partner, an original equipment manufacturer, OEM, an ambient service partner, a roaming service partner, a carrier network partner, a service seller, a service re-seller, a service wholesaler, a carrier network partner, a mobile virtual network operator, MVNO, or a virtual MVNO.

19. The method recited in any of claims 1 to 18, wherein the first device group is associated with an enterprise.

20. The method recited in any of claims 1 to 18, wherein the first device group is associated with a device group partner, a mobile virtual network operator, MVNO, a virtual MVNO, an original equipment manufacturer, OEM, an ambient service partner, a roaming service partner, a carrier network partner, a service seller, a service re-seller, a service wholesaler, or a carrier network partner.

21. The method recited in claim 9 or claim 14, wherein the second entity is a user associated with the end-user device.

22. The method recited in any of claims 1 to 21, wherein the internet-based service is a transaction service, a search service, an e-mail service, a social networking service, a music service, a shopping service, or an application downloading service.

23. A network system communicatively coupled to a wireless end-user device (100) over a wireless data network (125), the network system comprising:
means (118) for obtaining one or more charging data records, CDRs, from one or more CDR sources, with at least one CDR source being the wireless end-user device, wherein each CDR of the one or more CDRs comprises information identifying one or more of a plurality of device-based service usage activities associated with the end-user device (100), and wherein each CDR indicates a service usage associated with each of the one or more identified device-based service usage activities; and
means (123) for generating, accounting and settlement information by aggregating the CDRs comprising the information identifying one or more of a plurality of device-based service usage activities associated with the wireless end-user device (100);
applying a set of rules to the aggregated CDRs, and
generating the accounting and settlement information in accordance with said set of rules,
wherein the end-user device (100) belongs to a first device group of a plurality of device groups, the first device group comprising one or more end-user devices including the end-user device (100), and wherein the set of rules is determined based on the end-user device (100) belonging to the first device group.

## Patentansprüche

1. Verfahren, durchgeführt von einem Netzwerksystem, das über ein drahtloses Datennetzwerk (125) mit einem drahtlosen Endbenutzergerät (100) kommunikativ verbunden ist, wobei das Verfahren Folgendes umfasst:
Erhalten eines oder mehrerer Ladedatensätze, CDRs, von einer oder mehreren CDR-Quellen (100, 118), wobei mindestens eine CDR-Quelle das drahtlose Endbenutzergerät (100) ist, wobei jeder CDR des einen oder der mehreren CDRs Informationen umfasst, die eine oder mehrere aus einer Vielzahl von gerätebasierten Dienstnutzungsaktivitäten feststellen, die dem Endbenutzergerät (100) zugeordnet sind, und wobei jeder CDR eine Dienstnutzung anzeigt, die jeder der einen oder mehreren festgestellten gerätebasierten Dienstnutzungsaktivitäten zugeordnet ist; und
Erzeugen von Abrechnungs- und Zahlungsinformationen durch Zusammenfassen der CDRs, die die Informationen umfassen, welche eine oder mehrere einer Vielzahl von gerätebasierten Dienstnutzungsaktivitäten feststellen, die dem drahtlosen Endbenutzergerät (100) zugeordnet sind,
Anwenden eines Satzes von Regeln auf die zusammengefassten CDRs, und
Erzeugen der Abrechnungs- und Zahlungsinformationen in Übereinstimmung mit dem Satz von Regeln,
wobei das Endbenutzergerät (100) zu einer ersten Gerätegruppe einer Vielzahl von Gerätegruppen gehört, wobei die erste Gerätegruppe ein oder mehrere Endbenutzergeräte einschließlich des Endbenutzergeräts (100) umfasst, und wobei der Satz von Regeln auf der Grundlage des Endbenutzergeräts (100) bestimmt wird, das zu der ersten Gerätegruppe gehört.

2. Verfahren nach Anspruch 1, wobei die Informationen, die eine oder mehrere gerätebasierte Dienstnutzungsaktivitäten feststellen, einen oder mehrere Transaktionscodes umfassen.

3. Verfahren nach Anspruch 1, wobei jede der einen oder mehreren gerätebasierten Dienstnutzungsaktivitäten einem Abrechnungsereignis zugeordnet ist.

4. Verfahren nach einem der Ansprüche 1 bis 3, wobei der eine oder die mehreren CDRs eine Dienstnutzungsabrechnung für mindestens eine der einen oder mehreren gerätebasierten Dienstnutzungsaktivitäten bereitstellt, auf der Grundlage der Anwendungsschicht-Dienstnutzungsüberwachung und/oder der Transaktionsdienstnutzungsüberwachung.

5. Verfahren nach einem der Ansprüche 1 bis 4, ferner umfassend das Erstellen eines Abstimmungsberichts auf der Grundlage der Informationen, die eine oder mehrere einer Vielzahl von gerätebasierten Dienstnutzungsaktivitäten feststellen, die dem Endbenutzergerät (100) zugeordnet sind.

6. Verfahren nach einem der Ansprüche 1 bis 5, wobei mindestens eine der einen oder mehreren CDR-Quellen ein Netzwerkelement ist.

7. Verfahren nach einem der Ansprüche 1 bis 5, wobei die eine oder die mehreren CDR-Quellen das Endbenutzergerät (100) und ein Netzwerkelement einschließen, und die eine oder die mehreren CDRs eine erste CDR von dem Endbenutzergerät (100) und eine zweite CDR von dem Netzwerkelement einschließen.

8. Verfahren nach Anspruch 7, wobei mindestens einer der ersten CDR und der zweiten CDR Informationen einschließt, die eine bestimmte gerätebasierte Dienstnutzungsaktivität feststellen, die für das Endbenutzergerät verfügbar ist.

9. Verfahren nach einem der Ansprüche 1 bis 6, wobei der Satz von Regeln konfiguriert ist zum Unterstützen bei dem
Abrechnen mit der Partnerentität des mindestens ersten Teils der Dienstnutzung, die der einen oder den mehreren gerätebasierten Dienstnutzungsaktivitäten zugeordnet ist, die von dem mindestens einen der einen oder mehreren CDRs angezeigt werden, und
Abrechnen mit einer zweiten Entität für den mindestens zweiten Teil der Dienstnutzung, die der einen oder mehreren gerätebasierten Dienstnutzungsaktivitäten zugeordnet ist, die von dem mindestens einen der einen oder mehreren CDRs angezeigt werden.

10. Verfahren nach Anspruch 1, wobei der eine oder die mehreren CDRs eine erste gerätebasierte Dienstnutzungsaktivität und eine zweite gerätebasierte Dienstnutzungsaktivität feststellen.

11. Verfahren nach einem der Ansprüche 1 bis 8, wobei der Satz von Regeln konfiguriert ist zum
Bestimmen einer Abweichung auf der Grundlage von mindestens einem der ein oder mehreren CDRs,
Einschließen der Abweichung in die Abrechnungs- und Zahlungsinformationen.

12. Verfahren nach einem der Ansprüche 1 bis 8, wobei der Satz von Regeln konfiguriert ist zum
Bestimmen eines Umsatzanteils oder einer Prämie auf der Grundlage von mindestens einem der ein oder mehreren CDRs,
Einschließen des Umsatzanteils oder der Prämie in die Abrechnungs- und Zahlungsinformationen.

13. Verfahren nach einem der Ansprüche 1 bis 8, wobei der Satz von Regeln konfiguriert ist zum
Bestimmen einer Abweichung auf der Grundlage von mindestens einem der ein oder mehreren CDRs und auf der Grundlage einer Auswahl eines Dienstplans durch einen Benutzer oder eines Kaufs durch einen Benutzer,
Einschließen der Abweichung in die Abrechnungs- und Zahlungsinformationen.

14. Verfahren nach einem der Ansprüche 1 bis 8, wobei der Satz von Regeln so konfiguriert ist, um bei der Implementierung eines Umsatzanteils zwischen der Partnerentität und einer zweiten Entität zu unterstützen.

15. Verfahren nach einem der Ansprüche 1 bis 8, wobei der Satz von Regeln so konfiguriert ist, um bei der Implementierung eines Umsatzanteils zwischen der Partnerentität und dem Betreiber des drahtlosen Datennetzes zu unterstützen.

16. Verfahren nach einem der Ansprüche 1 bis 8, wobei der Satz von Regeln so konfiguriert ist, um bei der Zuteilung einer festen Gebühr an die Partnerentität zu unterstützen.

17. Verfahren nach einem der Ansprüche 1 bis 16, wobei die Abrechnungs- und Zahlungsinformationen so konfiguriert ist, um bei dem Abrechnen mit einem dem Endgerät zugeordneten Nutzer zu unterstützen.

18. Verfahren nach einem der Ansprüche 1 bis 17, wobei die Partnerentität Folgendes umfasst: einen Gerätegruppenpartner, einen Originalgerätehersteller (OEM), einen Ambient-Service-Partner, einen Roaming-Service-Partner, einen Carrier-Netzwerk-Partner, einen Service-Anbieter, einen Service-Reseller, einen Service-Großhändler, einen Carrier-Netzwerk-Partner, einen Betreiber eines virtuellen Mobilfunknetzes (MVNO) oder einen virtuellen MVNO.

19. Verfahren nach einem der Ansprüche 1 bis 18, wobei die erste Gerätegruppe einem Unternehmen zugeordnet ist.

20. Verfahren nach einem der Ansprüche 1 bis 18, wobei die erste Gerätegruppe Folgendem zugeordnet ist: einem Gerätegruppenpartner, einem Betreiber eines virtuellen Mobilfunknetzes (MVNO), einem virtuellen MVNO, einem Originalgerätehersteller (OEM), einem Ambient-Service-Partner, einem Roaming-Service-Partner, einem Carrier-Netzwerk-Partner, einem Service-Anbieter, einem Service-Reseller, einem Service-Großhändler oder einem Carrier-Netzwerk-Partner.

21. Verfahren nach Anspruch 9 oder Anspruch 14, wobei die zweite Entität ein dem Endbenutzergerät zugeordneter Benutzer ist.

22. Verfahren nach einem der Ansprüche 1 bis 21, wobei der internetbasierte Dienst ein Transaktionsdienst, ein Suchdienst, ein E-Mail-Dienst, ein Social-Networking-Dienst, ein Musikdienst, ein Einkaufsdienst oder ein Dienst zum Herunterladen von Anwendungen ist.

23. Netzwerksystem, das über ein drahtloses Datennetzwerk (125) kommunikativ mit einem drahtlosen Endbenutzergerät (100) verbunden ist, wobei das Netzwerksystem Folgendes umfasst:
Mittel (118) zum Erhalten eines oder mehrerer Ladedatensätze, CDRs, von einer oder mehreren CDR-Quellen, wobei mindestens eine CDR-Quelle das drahtlose Endbenutzergerät ist, wobei jeder CDR des einen oder der mehreren CDRs Informationen umfasst, die eine oder mehrere einer Vielzahl von gerätebasierten Dienstnutzungsaktivitäten feststellen, die dem Endbenutzergerät (100) zugeordnet sind, und wobei jeder CDR eine Dienstnutzung anzeigt, die jeder der einen oder mehreren festgestellten gerätebasierten Dienstnutzungsaktivitäten zugeordnet ist; und
Mittel (123) zum Erzeugen, Verbuchen und Abrechnen von Informationen durch Zusammenfassen der CDRs, die die Informationen umfassen, welche eine oder mehrere einer Vielzahl von gerätebasierten Dienstnutzungsaktivitäten feststellen, die dem drahtlosen Endbenutzergerät (100) zugeordnet sind;
Anwenden eines Satzes von Regeln auf die zusammengefassten CDRs, und
Erzeugen der Abrechnungs- und Zahlungsinformationen gemäß dem genannten Satz von Regeln,
wobei das Endbenutzergerät (100) zu einer ersten Gerätegruppe einer Vielzahl von Gerätegruppen gehört, wobei die erste Gerätegruppe ein oder mehrere Endbenutzergeräte einschließlich des Endbenutzergeräts (100) umfasst, und wobei der Satz von Regeln basierend auf dem Endbenutzergerät (100), das zu der ersten Gerätegruppe gehört, bestimmt wird.

## Revendications

1. Procédé réalisé par un système de réseau couplé de manière communicative à un dispositif d'utilisateur final sans fil (100) sur un réseau de données sans fil (125), le procédé comprenant :
l'obtention d'un ou plusieurs enregistrements de données de taxation, CDR, à partir d'une ou plusieurs sources de CDR (100, 118), avec au moins une source de CDR qui est le dispositif d'utilisateur final sans fil (100), dans lequel chaque CDR des un ou plusieurs CDR comprend des informations identifiant une ou plusieurs d'une pluralité d'activités d'utilisation de service basées sur le dispositif associées au dispositif d'utilisateur final sans fil (100), et dans lequel chaque CDR indique une utilisation de service associée à chacune des une ou plusieurs activités d'utilisation de service basées sur le dispositif identifiées ; et
la génération d'informations de comptabilité et de règlement en regroupant les CDR comprenant les informations identifiant une ou plusieurs d'une pluralité d'activités d'utilisation de service basées sur le dispositif associées au dispositif d'utilisateur final sans fil (100),
l'application d'un ensemble de règles aux CDR regroupés, et
la génération des informations de comptabilité et de règlement conformément audit ensemble de règles,
dans lequel le dispositif d'utilisateur final (100) appartient à un premier groupe de dispositifs d'une pluralité de groupes de dispositifs, le premier groupe de dispositifs comprenant un ou plusieurs dispositifs d'utilisateur final incluant le dispositif d'utilisateur final (100), et dans lequel l'ensemble de règles est déterminé sur la base du dispositif d'utilisateur final (100) appartenant au premier groupe de dispositifs.

2. Procédé selon la revendication 1, dans lequel les informations identifiant une ou plusieurs activités d'utilisation de service basées sur le dispositif comprennent un ou plusieurs codes de transaction.

3. Procédé selon la revendication 1, dans lequel chacune des une ou plusieurs activités d'utilisation de service basées sur le dispositif est associée à un événement de facturation.

4. Procédé selon l'une quelconque des revendications 1 à 3, dans lequel les un ou plusieurs CDR fournissent une comptabilité d'utilisation de service d'au moins une des une ou plusieurs activités d'utilisation de service basées sur le dispositif, sur la base de la surveillance d'utilisation de service de couche d'application et/ou de la surveillance d'utilisation de service de transaction.

5. Procédé selon l'une quelconque des revendications 1 à 4, comprenant en outre la génération d'un rapport de réconciliation sur la base des informations identifiant une ou plusieurs d'une pluralité d'activités d'utilisation de service basées sur le dispositif associées au dispositif d'utilisateur final sans fil (100) .

6. Procédé selon l'une quelconque des revendications 1 à 5, dans lequel au moins une des une ou plusieurs sources de CDR est un élément de réseau.

7. Procédé selon l'une quelconque des revendications 1 à 5, dans lequel les une ou plusieurs sources de CDR incluent le dispositif d'utilisateur final (100) et un élément de réseau, et les un ou plusieurs CDR incluent un premier CDR provenant du dispositif d'utilisateur final (100) et un second CDR provenant de l'élément de réseau.

8. Procédé selon la revendication 7, dans lequel au moins un du premier CDR et du second CDR inclut des informations identifiant une activité d'utilisation de service basée sur le dispositif particulier disponible pour le dispositif d'utilisateur final.

9. Procédé selon l'une quelconque des revendications 1 à 6, dans lequel l'ensemble de règles est configuré pour faciliter
la facturation à l'entité partenaire de l'au moins une première partie d'utilisation de service associée aux une ou plusieurs activités d'utilisation de service basées sur le dispositif indiquées par l'au moins un des un ou plusieurs CDR, et
la facturation à une seconde entité de l'au moins une seconde partie d'utilisation de service associée aux une ou plusieurs activités d'utilisation de service basées sur le dispositif indiquées par l'au moins un des un ou plusieurs CDR.

10. Procédé selon la revendication 1, dans lequel les un ou plusieurs CDR identifient une première activité d'utilisation de service basée sur le dispositif et une seconde activité d'utilisation de service basée sur le dispositif.

11. Procédé selon l'une quelconque des revendications 1 à 8, dans lequel l'ensemble de règles est configuré pour :
déterminer un décalage sur la base de l'au moins un des un ou plusieurs CDR,
inclure le décalage dans les informations de comptabilité et de règlement.

12. Procédé selon l'une quelconque des revendications 1 à 8, dans lequel l'ensemble de règles est configuré pour :
déterminer un partage de recettes ou une prime sur la base de l'au moins un des un ou plusieurs CDR,
inclure le partage de recettes ou la prime dans les informations de comptabilité et de règlement.

13. Procédé selon l'une quelconque des revendications 1 à 8, dans lequel l'ensemble de règles est configuré pour :
déterminer un décalage sur la base de l'au moins un des un ou plusieurs CDR et sur la base d'une sélection d'un plan de service par un utilisateur ou d'un achat par un utilisateur,
inclure le décalage dans les informations de comptabilité et de règlement.

14. Procédé selon l'une quelconque des revendications 1 à 8, dans lequel l'ensemble de règles est configuré pour faciliter la mise en œuvre d'un partage de recettes entre l'entité partenaire et une seconde entité.

15. Procédé selon l'une quelconque des revendications 1 à 8, dans lequel l'ensemble de règles est configuré pour faciliter la mise en œuvre d'un partage de recettes entre l'entité partenaire et l'opérateur du réseau de données sans fil.

16. Procédé selon l'une quelconque des revendications 1 à 8, dans lequel l'ensemble de règles est configuré pour faciliter l'attribution d'une rémunération fixe à l'entité partenaire.

17. Procédé selon l'une quelconque des revendications 1 à 16, dans lequel les informations de comptabilité et de règlement facilitent la facturation à un utilisateur associé au dispositif d'utilisateur final.

18. Procédé selon l'une quelconque des revendications 1 à 17, dans lequel l'entité partenaire comprend un partenaire de groupe de dispositifs, un fabricant d'équipements d'origine, OEM, un partenaire de services ambiants, un partenaire de services d'itinérance, un partenaire de réseau porteur, un vendeur de services, un revendeur de services, un négociant en gros de services, un partenaire de réseau porteur, un opérateur de réseau virtuel mobile, MVNO, ou un MVNO virtuel.

19. Procédé selon l'une quelconque des revendications 1 à 18, dans lequel le premier groupe de dispositifs est associé à une entreprise.

20. Procédé selon l'une quelconque des revendications 1 à 18, dans lequel le premier groupe de dispositifs est associé à un partenaire de groupe de dispositifs, un opérateur de réseau virtuel mobile, MVNO, un MVNO virtuel, un fabricant d'équipements d'origine, OEM, un partenaire de services d'ambiance, un partenaire de services d'itinérance, un partenaire de réseau porteur, un vendeur de services, un revendeur de services, un négociant en gros de services, ou un partenaire de réseau porteur.

21. Procédé selon la revendication 9 ou la revendication 14, dans lequel la seconde entité est un utilisateur associé au dispositif d'utilisateur final.

22. Procédé selon l'une quelconque des revendications 1 à 21, dans lequel le service basé sur Internet est un service de transaction, un service de recherche, un service de messagerie électronique, un service de réseautage social, un service de musique, un service d'achat ou un service de téléchargement d'application.

23. Système de réseau couplé de manière communicative à un dispositif d'utilisateur final sans fil (100) sur un réseau de données sans fil (125), le système de réseau comprenant :
des moyens (118) pour obtenir un ou plusieurs enregistrements de données de taxation, CDR, à partir d'une ou plusieurs sources de CDR, avec au moins une source de CDR qui est le dispositif d'utilisateur final sans fil, dans lequel chaque CDR des un ou plusieurs CDR comprend des informations identifiant une ou plusieurs d'une pluralité d'activités d'utilisation de service basées sur le dispositif associées au dispositif d'utilisateur final (100), et dans lequel chaque CDR indique une utilisation de service associée à chacune des une ou plusieurs activités d'utilisation de service basées sur le dispositif identifiées ; et
des moyens (123) pour générer des informations de comptabilité et de règlement en regroupant les CDR comprenant les informations identifiant une ou plusieurs d'une pluralité d'activités d'utilisation de service basées sur le dispositif associées au dispositif d'utilisateur final sans fil (100) ;
l'application d'un ensemble de règles aux CDR regroupés, et
la génération des informations de comptabilité et de règlement conformément audit ensemble de règles,
dans lequel le dispositif d'utilisateur final (100) appartient à un premier groupe de dispositifs d'une pluralité de groupes de dispositifs, le premier groupe de dispositifs comprenant un ou plusieurs dispositifs d'utilisateur final incluant le dispositif d'utilisateur final (100), et dans lequel l'ensemble de règles est déterminé sur la base du dispositif d'utilisateur final (100) appartenant au premier groupe de dispositifs.
